# EUROPÄISCHE PATENTANMELDUNG

(11) **EP 0 990 914 A2**
(43) Veröffentlichungstag der Anmeldung: **05.04.2000**
(21) Anmeldenummer: 99116958.2
(22) Anmeldetag: 27.08.1999
(51) Int. Cl.: G01R 31/04

(54) **Prüfeinrichtung für mit Lichtwellenleitern bestückte Stecker**

(30) Priorität: 01.10.1998 DE 29817515 U
(71) Anmelder: TSK Prüfsysteme GmbH, 32457 Porta Westfalica (DE)
(72) Erfinder: Mohme, Heinrich, 32602 Vlotho (DE)
(74) Vertreter: Stracke, Alexander, Dipl.-Ing.

(57) **Zusammenfassung**

Eine Prüfeinrichtung für mit Lichtwellenleitern bestückte Stecker mit einem Kupplungsteil, das eine Steckeraufnahme aufweist, in dem zumindest ein Prüfstift (1) angeordnet ist, mit dem ein zugeordneter Lichtwellenleiter des Steckers auf Funktionsfähigkeit prüfbar ist, ist so ausgebildet, daß in einem Prüfkopf (2) des Prüfstiftes (1) ein Sende- oder Empfangsteil (3) angeordnet ist.

## Beschreibung

Die vorliegende Erfindung betrifft eine Prüfeinrichtung für mit Lichtwellenleitern bestückte Stecker gemäß dem Oberbegriff des Anspruchs 1.

Eine derartige Prüfeinrichtung ist aus der DE 297 16 026 bekannt.

Darin ist beschrieben, daß der im wesentlichen durch einen Lichtwellenleiter gebildete Prüfstift über einen Lichtwellenleiter an einen Empfänger angeschlossen ist. Dieser vergleicht die empfangenen Signale mit einem definierten Wert, wobei die Signale von einem Sender ausgehen, der am anderen Ende des Lichtwellenleiters angeschlossen ist, der in den Stecker eingesteckt und mit diesem verbunden ist und dessen einwandfreie Durchgängigkeit ermittelt werden soll.

In jedem Fall ist ein vom Prüfstift separater Empfänger und Sender erforderlich, die beide mit einer Auswerteelektronik gekoppelt sind.

Nachteilig ist jedoch, daß durch den Lichtwellenleiter, der den Prüfstift mit dem Empfänger bzw. dem Sender verbindet, durchaus Verluste auftreten, die beispielsweise in einer Beschädigung des Lichtwellenleiters zwischen dem Prüfstift und dem Empfänger oder dem Sender begründet sein können.

Zumindest besteht die Gefahr einer Beschädigung des Lichtwellenleiters bei einer Montage bzw. Demontage des Prüfstiftes.

Darüber hinaus ist ein Auswechseln des Senders oder Empfängers, was aus unterschiedlichsten Gründen erforderlich sein kann, relativ aufwendig, da hierzu die gesamte Vorrichtung soweit zu zerlegen ist, daß ein freier Zugriff zu den entsprechenden Teilen möglich ist.

Der vorliegenden Erfindung liegt daher die Aufgabe zugrunde, eine Prüfeinrichtung der gattungsgemäßen Art so weiter zu entwickeln, daß ihre Betriebssicherheit erhöht wird und die Betriebskosten aufgrund der Möglichkeit, die Wartung und Instandsetzung einfacher und schneller durchführen zu können, gesenkt werden. Diese Aufgabe wird durch eine Prüfeinrichtung gelöst, die die Merkmale des Anspruchs 1 aufweist.

Eine solche Prüfeinrichtung hat zunächst einmal den Vorteil, daß kein zusätzlicher Lichtwellenleiter vom Prüfstift zum Empfänger bzw. zum Sender erforderlich ist.

Hierdurch werden natürlich die durch den Einsatz eines Lichtwellenleiters sich möglicherweise ergebenden Probleme hinsichtlich der Betriebssicherheit beispielsweise durch Beschädigung vollständig vermieden. So sind daraus resultierende Fehlermeldungen, wie sie beispielsweise auftreten, wenn ein Lichtwellenleiter geknickt ist, ausgeschlossen.

In der Praxis bedeutet dies, daß, wenn ein Fehler ermittelt wird, dieser ausschließlich im Lichtwellenleiter vorliegt, der an dem Stecker angeschlossen ist.

Insoweit ergibt sich auch eine wesentliche Verbesserung der Prüfsicherheit.

Durch die räumliche Trennung zwischen dem Empfänger und/oder Sender und der Auswertelektronik kann nun nun ein defekter Empfänger oder Sender leicht ausgewechselt werden, ohne daß die gesamte Prüfeinrichtung zerlegt werden muß.

Zu dieser im Bedarfsfall sehr leichten Auswechselbarkeit des Empfängers oder Senders trägt auch ein weiterer vorteilhafter Gedanke der Erfindung bei, wonach der Prüfkopf abnehmbar am Prüfstift im übrigen befestigt ist, beispielsweise durch Verschrauben.

Der Prüfkopf ist von der Steckeraufnahme her leicht zugänglich und ohne weiteres abzunehmen und auszutauschen, wodurch sich natürlich erhebliche Montagevorteile ergeben, die insbesondere durch kürzere Betriebsunterbrechungszeiten entstehen.

Sowohl der Empfänger wie auch der Sender bestehen in an sich bekannter Weise aus Dioden, die als handelsübliche Bauteile äußerst preiswert angeboten werden. Deren Beschaffungskosten stehen in keinem Verhältnis zu den bislang hohen Montagekosten.

Weitere vorteilhafte Ausgestaltungen der Erfindung sind in den Unteransprüchen gekennzeichnet.

Ein Ausführungsbeispiel der Erfindung wird nachfolgend anhand der beigefügten Zeichnung beschrieben.

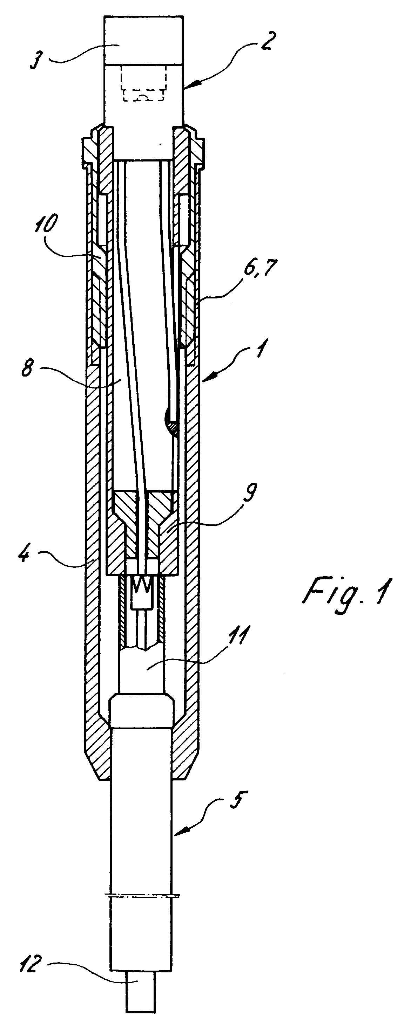

Die
- Figur 1: zeigt eine Einzelheit der erfindungsgemäßen Prüfeinrichtung in einer geschnittenen Seitenansicht.

In der Figur ist ein Prüfstift 1 dargestellt, der eine Hülse 4 aufweist, die in einem nicht dargestellten Kupplungsteil festgelegt ist.

In die Hülse 4 ist eine Gewindebuchse 10 eingeschraubt, wobei an der Gewindebuchse 10 ein Außen- und in der Hülse 4 ein Innengewinde 6, 7 vorgesehen sind.

In der Gewindebuchse 10 ist eine Buchse 9 achsverschieblich gelagert, in der ein Prüfkopf 2 mit einer Empfängerdiode 3 angeordnet ist. Anstelle einer Empfängerdiode 3 kann auch eine Senderdiode vorgesehen sein. Dabei ist die Empfängerdiode 3 an einem Kolben 8 angeschlossen, der in der Buchse 9 befestigt ist.

An der dem Prüfkopf 2 gegenüberliegenden Stirnseite stützt sich die Buchse 9 an einen Kontaktstift 11 ab, der federbelastet und axial verschiebbar in einer Kontakthülse 5 geführt ist, die fest mit der Hülse 4 verbunden ist.

Dabei wirkt die Federkraft in Richtung der Buchse 9, so daß ein zu prüfender Stecker nur unter Herunterdrücken des Prüfkopfes 2 gegen diese Federkraft in die nicht dargestellte Steckeraufnahme einsetzbar ist.

An die Kontakthülse 5 ist eine Leitung 12 angeschlossen, die mit einer Auswerteelektronik in Verbindung steht.

Um den Prüfkopf 2 auszuwechseln, ist die Gewindebuchse 10 aus der Hülse 4 herauszuschrauben, wobei zweckmäßigerweise die Gewindebuchse 10 oberseitig eine Werkzeugaufnahme, beispielsweise in Form eines Sechskantes, aufweist, so daß ein Einsetzen von oben her bzw. ein Herausdrehen ohne weiteres möglich ist.

### Bezugszeichenliste

- 1: Prüfstift
- 2: Prüfkopf
- 3: Empfängerdiode
- 4: Hülse
- 5: Kontakthülse
- 6: Gewinde
- 7: Gewinde
- 8: Kolben
- 9: Buhse
- 10: Gewindebuhse
- 11: Kontaktstift
- 12: Leitung

## Patentansprüche

1. Prüfeinrichtung für mit Lichtwellenleitern bestückte Stecker mit einem Kupplungsteil, das eine Steckeraufnahme aufweist, in dem zumindest ein Prüfstift (1) angeordnet ist, mit dem ein zugeordneter Lichtwellenleiter des Steckers auf Funktionsfähigkeit prüfbar ist, **dadurch gekennzeichnet, daß** in einem Prüfkopf (2) des Prüfstiftes (1) ein Sende- oder Empfangsteil (3) angeordnet ist.

2. Prüfeinrichtung nach Anspruch 1, **dadurch gekennzeichnet, daß** das Sende- oder Empfangsteil (3) in einer Buchse (9) festgelegt ist, die gegenüber einer Hülse (4) des Prüfstiftes (1) axial verschiebbar gelagert ist.

3. Prüfeinrichtung nach Anspruch 2, **dadurch gekennzeichnet, daß** die Buchse (9) achsverschiebbar in einer Gewindebuchse (10) befestigt ist, die mit der Hülse (4) verschraubt ist.

4. Prüfeinrichtung nach Anspruch 1 oder 2, **dadurch gekennzeichnet, daß** die Buchse (9) mit ihrer dem Prüfkopf (2) gegenüberliegenden Stirnseite an einem Kontaktstift (11) anliegt, der in einer Kontakthülse (5) längsverschiebbar gelagert ist.

5. Prüfeinrichtung nach Anspruch 4, **dadurch gekennzeichnet, daß** der Kontaktstift (11) federbelastet an der Buchse (9) anliegt.

6. Prüfeinrichtung nach Anspruch 3, **dadurch gekennzeichnet, daß** die Gewindebuchse (10) ein Außengewinde (6) aufweist, das mit einem Innengewinde der Hülse (4) korrespondiert.
